# EUROPEAN PATENT SPECIFICATION

(11) **EP 3 586 460 B1**
(45) Date of publication and mention of the grant of the patent: **22.09.2021**
(21) Application number: 17711184.6
(22) Date of filing: 17.03.2017
(51) Int. Cl.: H04L 1/18

(54) **TECHNIQUES FOR LATENCY-AWARE PROCESSING OF RADIO FRAMES**
VERFAHREN ZUR LATENZBEWUSSTEN VERARBEITUNG VON FUNKRAHMEN
TECHNIQUES DE TRAITEMENT SENSIBLE À LA LATENCE DE TRAMES RADIO

(43) Date of publication of application: 01.01.2020
(73) Proprietor: Huawei Technologies Duesseldorf GmbH, 40549 Düsseldorf (DE)
(72) Inventor: LUO, Jian, 80992 Munich (DE); IBRAHIM, Mohamed, 80992 Munich (DE)
(74) Representative: Körber, Martin Hans
(86) International application number: PCT/EP2017/056351
(87) International publication number: WO 2018/166615

(56) References cited:
- US-A1- 2009 276 676
- HUAWEI ET AL: "Discussion on frame structure for NR", 3GPP DRAFT; R1-164032, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 15 May 2016 (2016-05-15), XP051089779, Retrieved from the Internet: URL:http://www.3gpp.org/ftp/tsg_ran/WG1_RL 1/TSGR1_85/Docs/ [retrieved on 2016-05-15]
- NOKIA ET AL: "On the resource allocation for PUCCH", 3GPP DRAFT; R1-1703321_PUCCH RA _FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20170213 - 20170217 6 February 2017 (2017-02-06), XP051220473, Retrieved from the Internet: URL:http://www.3gpp.org/ftp/tsg_ran/WG1_RL 1/TSGR1_88/Docs/ [retrieved on 2017-02-06]
- "3 Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 12)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.10.0, 1 July 2016 (2016-07-01), pages 1-254, XP051295301, [retrieved on 2016-07-01]

## Description

### TECHNICAL FIELD

The present disclosure relates to techniques for latency-aware processing of radio frames. In particular, the invention relates to a radio device configuring an Acknowledgement (ACK) field in a radio subframe based on processing power requirements. The invention further relates to a frame structure and a method for processing latency-aware round trip time (RTT) adaptation.

### BACKGROUND

In new radio communication networks such as 5G, low latency is one of the most important Key Performance Indicator (KPI). The time between transmission of a packet and the reception of the Acknowledgement (ACK) is defined as the Round Trip Time (RTT). 3GPP New Radio (NR) standardization is continuously refining Next Generation radio networks. In particular, in the fields of Internet-of-Things (IoT), Vehicle-to-Anything (V2X) and machine-to-machine (M2M) communication, there is a need for continuously reducing the communication delay.

HUAWEI et al, "Discussion on frame structure for NR", vol. RAN WG1, no. Nanjing, China; 20160515, 3GPP Draft, R1-164032, proposes a configurable Hybrid automatic repeat request (HARQ) timing for difference services and/or different UE processing capability.

### SUMMARY

Hence, it is the object of the invention to provide a concept for improving the communication in new radio networks, in particular by reducing the latency between radio devices.

This object is achieved by the features of the independent claims. Further implementation forms are apparent from the dependent claims, the description and the figures.

A basic idea of the invention is to introduce a new frame structure with flexible location of the Downlink (DL) / Uplink (UL) ACK so that the time from finishing the data processing and the ACK transmission can be minimized. In normal cases, the ACK can even be sent directly after the finishing of data processing. In other words, the RTT is adapted to the processing time. The locations of the DL/UL ACK may be indicated in the DL CTL (Downlink Control Section). Furthermore, since the processing time can vary depending on the reliability level, e.g. shorter decoding time implies lower reliability or higher error probability, this invention allows to trade reliability against latency. A trade-off between latency and reliability can be achieved.

Applying the concepts disclosed hereinafter allows to exploit the following advantages: The RTT is not fixed to the location of the control channels. Therefore, it is easy to tune the RTT with finer granularity to meet latency requirements; When the Rx cannot finish data processing before the next CTL, it does not need to wait one more subframe. The waiting time is much smaller. The ACK can even be sent directly after the finishing of data processing. If the DL Rx has high processing capability or if the DL portion is very small, the Rx can probably finish data processing before the UL CTL. The ACK can be even sent before the UL CTL. This means the benefit of high processing capability of the Rx can be exploited. Furthermore, this invention introduces a mechanism of DL/UL role exchange, which allows the more latency critical applications to have the lowest possible RTT allowed by the disclosed frame structures.

In this disclosure use cases are considered where large bandwidth and high throughput are required. Accordingly, the Rx may need long time to decode the data (messages). The needed processing time may depend on the DL/UL traffic ratio (throughput ratio), the information amount, and the processing power.

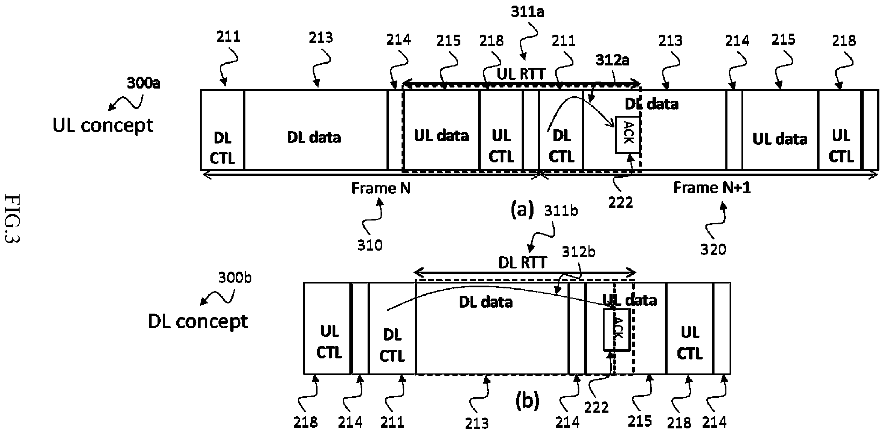

In this disclosure a concept for a frame structure is presented where the control information is divided into two parts: 1) Decoding-related signalling information which is fixed location in the DL/UL CTL, such as MCS, MIMO, Scheduling, etc.; and 2) Latency related signalling information, which has flexible location and can be either inside or outside the DL/UL CTL ACK, such as ACK signalling. The main concept of this disclosure consists of the UL and DL concepts as described below with respect to Figures 3a to 10.

The radio devices described herein may be implemented in wireless communication networks, in particular communication networks based on mobile communication standards such as LTE and 5G, in particular new radio networks according to 3GPP New Radio (NR) standardization. The radio devices described herein may be implemented both in Base Station (BS), eNodeB, gNB and User Equipments (UEs), for example in the scenario of cellular radio access networks. The disclosed radio devices may further be implemented in mobile devices (or mobile stations or User Equipments (UE)), for example in the scenario of device-to-device (D2D) communication where one mobile device communicates with another mobile device or in the scenario of Vehicle-to-Anything (V2X) communications, where a radio cell in the vehicle communicates to any other device. The described radio devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

D2D communications in cellular networks is defined as direct communication between two mobile devices or mobile users without traversing the Base Station (BS) or eNodeB or the core network. D2D communications is generally non-transparent to the cellular network and can occur on the cellular spectrum (i.e., inband) or unlicensed spectrum (i.e., outband). D2D communications can highly increase spectral efficiency, improve throughput, energy efficiency, delay, and fairness of the network. The radio devices described herein may be implemented in mobile devices communicating under D2D scenarios. However, the radio devices described herein may also be implemented in base stations (BSs), eNodeBs or gNBs.

The radio devices described herein may be configured to transmit and/or receive radio signals. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The radio devices described herein may be designed in accordance to mobile communication standards such as e.g. the Long Term Evolution (LTE) standard or the advanced version LTE-A thereof or the new radio standard according to 3GPP New Radio (NR) standardization. LTE (Long Term Evolution), marketed as 4G and 5G LTE and beyond, is a standard for wireless communication of high-speed data for mobile phones and data terminals. The radio devices described herein may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

In order to describe the invention in detail, the following terms, abbreviations and notations will be used:
- NR:: New Radio
- RTT:: Round Trip Time
- DL:: Downlink
- UL:: Uplink
- BS:: Base Station, eNodeB, eNB, gNB
- UE:: User Equipment, e.g. a mobile device or a machine type communication device
- 5G:: 5^{th} generation according to 3GPP standardization
- LTE:: Long Term Evolution
- RF:: Radio Frequency
- GP:: Guard Period
- TDD:: Time Division Duplex
- RACH:: Random Access Channel
- ACK:: Acknowledgement
- TTI:: Transmission Time Interval
- TX:: Transmitter
- RX:: Receiver
- CTL:: Control channel
- CP:: Cyclic Prefix
- PRB:: Physical Resource Block
- MCS:: Modulation and Coding Scheme
- MTC:: Machine Type Communication
- V2V:: Vehicle to Vehicle
- V2X:: Vehicle to Anything
- D2D:: Device-to-device
- OFDM:: Orthogonal Frequency Division Multiplex

According to a first aspect, the invention relates to a radio device according to independent claim 1.

Such a radio device introduces a new frame structure with flexible location of the ACK field so that the time from finishing the data processing and the ACK transmission can be minimized. In normal cases, the ACK can even be sent directly after the finishing of data processing. In other words, the RTT can be adapted to the processing time.

According to the invention, defining the ACK field is further based on a metric with respect to a latency parameter and/or a reliability parameter.

This provides the advantage that this radio device allows to achieve a trade-off between latency and reliability.

In a second possible implementation form of the radio device according to the first aspect as such or according to the first implementation form of the first aspect, defining the ACK field is based on feedback from the second radio device, the feedback indicating the processing power of the second radio device and/or a required processing time for the radio subframe and/or a preferred ACK position within the radio subframe.

This provides the advantage that the structure of the radio subframe can be precisely adapted to the processing power of the second radio device by evaluating feedback information from the second radio device.

In a third possible implementation form of the radio device according to the first aspect as such or according to any of the preceding implementation forms of the first aspect, defining the ACK field comprises: determining a location of the ACK field in the radio subframe; and setting a value of the ACK field to an Acknowledgement (ACK) when processing the radio subframe by the RX processor is successful or to a Non-Acknowledgement (NACK) when processing the radio subframe by the RX processor is not successful.

This provides the advantage that the position of the ACK field can be flexible.

In a fourth possible implementation form of the radio device according to the first aspect as such or according to any of the preceding implementation forms of the first aspect, the radio device is configured for an uplink transmission, in which the radio device is configured to define: the radio subframe to comprise a Downlink control section (DL CTL) and a Downlink data section (DL DATA), and to locate the ACK field within the DL CTL or after a certain time shift from the DL CTL and to multiplex the ACK field with the DL DATA.

This provides the advantage that in Uplink transmission, the ACK field can be set to optimize latency and reliability for uplink transmission.

In a fifth possible implementation form of the radio device according to the fourth implementation form of the first aspect, the radio device is configured to define the DL CTL to indicate the location of the ACK field.

This provides the advantage that the second device knows where to find the ACK field.

In a sixth possible implementation form of the radio device according to the first aspect as such or according to any of the first to the third implementation forms of the first aspect, the radio device is configured for a Downlink transmission, in which the radio device is configured to define: the radio subframe to comprise an Uplink data section (UL DATA) and an Uplink control section (UL CTL) and to locate the ACK field within the UL CTL or before a certain time shift from the UL CTL and to multiplex the ACK field with the UL DATA.

This provides the advantage that the ACK can be sent within the same TTI / Subframe. In Downlink transmission, the ACK field can be set to optimize latency and reliability for downlink transmission.

In a seventh possible implementation form of the radio device according to the sixth implementation form of the first aspect, the radio subframe further comprises a Downlink control section (DL CTL), and the radio device is configured to define the DL CTL to indicate the location of the ACK field.

This provides the advantage that the second device knows where to find the ACK field.

In an eighth possible implementation form of the radio device according to the sixth or the seventh implementation form of the first aspect, the TX processor is configured to determine the ACK position and set the corresponding value in one of the next subframes if the RX processor cannot finish the processing of a Downlink data section (DL DATA) in the radio subframe before the current UL CTL.

This provides the advantage that the radio device is able to flexibly process the radio subframes. Depending on a processing power of the RX processor, the radio device can provide the ACK within the current radio subframe or within one of the next radio subframes.

In a ninth possible implementation form of the radio device according to the eighth implementation form of the first aspect, the radio device is configured to set an indicator in the radio subframe for indicating whether the ACK field is located in the current radio subframe or in one of the next radio subframes.

This provides the advantage that the second device knows whether the ACK field can be found in the current radio subframe or in one of the next radio subframes.

In a tenth possible implementation form of the radio device according to any of the sixth to the ninth implementation forms of the first aspect, the radio device is configured to insert an extra UL CTL within the DL DATA of the next radio subframe and to set the ACK field within the extra UL CTL, and configured to indicate that there is an extra UL CTL and/or to indicate a location of the extra UL CTL in the radio subframe.

This provides the advantage that the radio device can flexibly provide adaptable radio subframes having an extra UL CTL section if required or if necessary to reduce the latency/RTT.

According to the invention, the radio subframe is subdivided into a plurality of minislots, the ACK field comprises a plurality of ACK messages, each one related to a corresponding minislot, and the RX processor is configured to process the plurality of minislots and the TX processor is configured to acknowledge the processing of a respective minislot by setting a corresponding ACK message in the ACK field of the radio subframe.

This provides the advantage that by using minislots, resources can be saved due to the processing of a single ACK for a plurality of minislots.

In a twelfth possible implementation form of the radio device according to the eleventh implementation form of the first aspect, the ACK messages corresponding to the plurality of minislots have a same starting time within the radio subframe.

This provides the advantage that the second device knows the starting time of all minislots when obtaining the starting time of only one minislot.

According to the invention, the radio subframe is divided in time in terms of minislots and in frequency in terms of resource blocks, and each ACK message location is pointing to a certain minislot and resource block according to a certain predefined mapping rule.

This provides the advantage that the second radio device knows the structure of the minislots in the radio subframe as the mapping rule is predefined, i.e. known to the second radio device.

In a fourteenth possible implementation form of the radio device according to any of the eleventh to the thirteenth implementation forms of the first aspect, the TX processor is configured to acknowledge the processing of a specific number of minislots, in particular minislots having similar channel qualities, by setting a single Acknowledgement (ACK) message.

This improves the efficiency of the radio device and reduces signaling latency as one ACK is sufficient to acknowledge a plurality of minislots.

In a fifteenth possible implementation form of the radio device according to the first aspect as such or according to any of the preceding implementation forms of the first aspect, the TX processor is configured to perform a Downlink (DL)-Uplink (UL) role interchange by interchanging positions of a Downlink Control section (DL CTL) and an Uplink Control section (UL CTL), as well as positions of a Downlink Data section (DL DATA) and an Uplink data section (UL DATA) in the radio subframe.

This provides the advantage that the radio device can flexibly utilize Uplink and Downlink transmissions depending on the respective requirements with respect to latency and processing power. I.e., the frame structure can be flexibly configured to match the requirements of both links between two radio communication devices (base station and user terminal).

In a sixteenth possible implementation form of the radio device according to the fifteenth implementation form of the first aspect, the TX processor is configured to run a DL-UL role interchange procedure for triggering the DL-UL role interchange, wherein the DL-UL role interchange procedure is based on uplink and downlink latency parameters.

This provides the advantage that the radio device can flexibly trigger the DL-UL role interchange and optimize its behavior either for Uplink or for Downlink depending on which stream is more latency-critical.

In a seventeenth possible implementation form of the radio device according to the first aspect as such or according to any of the preceding implementation forms of the first aspect, a location of the ACK field depends on at least one of the following: a bandwidth of the transceiver, a guard period in the radio subframe, a ratio between a Downlink data section (DL DATA) and an Uplink data section (UL DATA) in the radio subframe and a presence of a random access channel (RACH) in the radio subframe.

This provides the advantage that the radio subframe can be dynamically adapted to changing situations as indicated above and can be flexibly applied in different situations such as the bandwidth of the transceiver, the guard period in the radio subframe, the ratio between a Downlink data section, DL DATA and an Uplink data section, UL DATA in the radio subframe and a presence of a random access channel, RACH in the radio subframe.

### BRIEF DESCRIPTION OF DRAWINGS

Further embodiments of the invention will be described with respect to the following figures, in which:
Fig. 1 shows a schematic diagram illustrating a self-contained frame structure 100 according to a first implementation;
Fig. 2 shows a schematic diagram illustrating a frame structure 200 according to a second implementation;
Fig. 3a shows a schematic diagram illustrating a frame structure 300a according to the disclosure for an Uplink concept;
Fig. 3b shows a schematic diagram illustrating a frame structure 300b according to the disclosure for a Downlink concept;
Fig. 4 shows a schematic diagram illustrating a frame structure 400 according to the disclosure for illustration of the factors for determining the ACK location;
Fig. 5a shows a schematic diagram illustrating a frame structure 500a according to the disclosure illustrating an example for ACK location within the next subframe;
Fig. 5b shows a schematic diagram illustrating a frame structure 500b according to the disclosure illustrating an example for an extra UL CTL indicator and ACK location within the next subframe;
Fig. 6 shows a schematic diagram illustrating a frame structure 600 according to the disclosure to illustrate an exemplary signaling procedure with multi-user;
Fig. 7 shows a schematic diagram illustrating an exemplary Downlink-Uplink role exchange procedure 700 according to the disclosure;
Fig. 8 shows a schematic diagram illustrating an exemplary frame structure 800 according to the disclosure before and after a DL-UL role exchange;
Fig. 9 shows a block diagram of a radio device 900 according to the disclosure;
Fig. 10a shows a schematic diagram illustrating a method 1000a for processing a radio subframe according to a downlink concept of the disclosure; and
Fig. 10b shows a schematic diagram illustrating a method 1000b for processing a radio subframe according to an uplink concept of the disclosure.

### DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

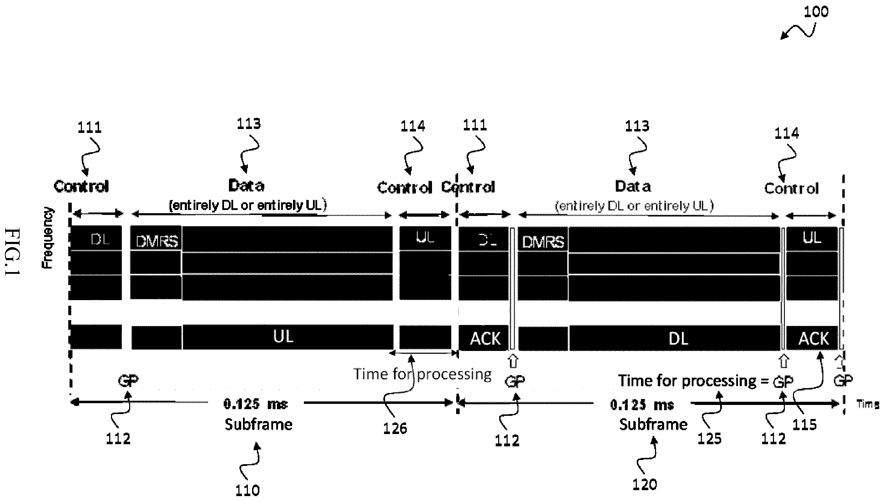

Fig. 1 shows a schematic diagram illustrating a self-contained frame structure 100 according to a first implementation.

The self-contained frame structure 100 was introduced to 3GPP New Radio (NR) standardization in order to achieve low Round Trip Time (RTT) and thus, low latency. Such frame structure 100 includes a Downlink (DL) Control Channel (CTL) 111, Uplink (UL) CTL 114, DL/UL data channel 113 as well as two Guard Periods (GP) 112. The DL/UL control channels 111, 114 are fixed at the beginning and end of the subframe 110, 120, respectively. The aim is to confine the RTT within a single Time Division Duplex (TDD) frame. The advantage is that in ideal case, all the signaling and feedback is contained in one block of time/frequency resource, i.e. within one subframe 110, 120. For example, the ACK 115 of the DL data 113 can be sent in the UL CTL 114 following it. However, for high throughput applications, especially when operating at millimeter wave frequencies with large system bandwidth, the processing of the data at the Receiver (Rx) is very demanding, especially for decoding. With the self-contained frame structure 100, the Rx only has very limited time to process 125 the data, i.e. for DL, only the GP duration 112, while for UL, the sum of 2 GP's 112 plus one CTL duration 114. Considering high throughput applications, the Rx can probably not finish data processing within the above mentioned time, therefore it has to wait one additional subframe to send the ACK 115, thus causing much increased latency. A further problem of such frame structure 100 is that DL and UL cannot be in the same subframe 110, which leads to increased overall latency for DL and UL transmissions.

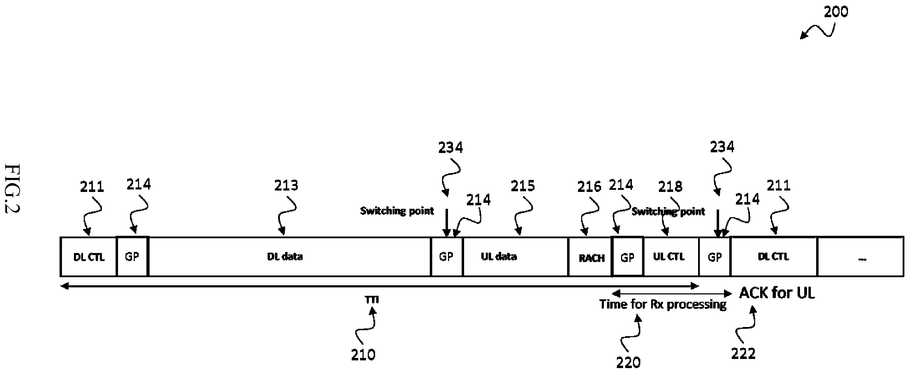

Fig. 2 shows a schematic diagram illustrating a frame structure 200 according to a second implementation.

The new frame structure 200 incorporates DL (Data 213 and CTL 211), UL (Data 215, CTL 218 and Random Access Channel, RACH 216) in a single subframe 210, as illustrated in Figure 2. The DL and UL data portions, i.e. the switching point 234 between DL data 213 and UL data 215, can be flexibly adapted to match the DL and UL traffic demands, e.g. within the Guard Period (GP) 214 as shown in Fig. 2. In this way, the overall latency for DL and UL transmissions can be reduced compared to the previous self-contained frame structure 100 described above with respect to Fig. 1. By having the UL portion, more time 220 is provided for the Rx to process the DL data 213 before sending the ACK 222. Furthermore, due to introduction of the RACH channel 216, more time is allowed for processing of UL data 215. However, the disadvantages include: The RTT is still fixed to the location of the control channels. Therefore, it is not easy to tune the RTT to meet latency requirements. Since the RACH 216 is not present in every subframe 210, some subframe 210 may still suffer from too short processing time 220 for UL data 215. If the Rx cannot finish data processing 220 before the next CTL 211, it has to wait one more subframe 210 to send ACK 222. If the DL Rx has high processing power or if the DL portion is very small, the Rx can probably finish data processing before the UL CTL 218. However, the Rx still has to wait until the UL CTL 218 to send ACK 222. This means the benefit of high processing capability cannot be exploited.

The frame structures presented in the following figures allow early arrival of the ACK 222, thereby greatly enhancing the chance of retransmission in the same TTI 210 of the ACK 222. The available processing time or the waiting time for DL and UL before the first ACK transmission opportunity is different, resulting in asymmetry of latencies in DL and UL. Such asymmetry may not fit to different applications/traffic types in DL and UL.

Fig. 3a shows a schematic diagram illustrating a frame structure according to the disclosure for an Uplink concept 300a and Fig. 3b shows a schematic diagram illustrating a frame structure according to the disclosure for a Downlink concept 300b.

The UL concept 300a is illustrated in Figure 3a. As shown, the ACK 222 can either be in DL CTL 211 or located after a certain time shift from DL CTL 211 and multiplexed with the DL data 213. The exact position of the ACK 222 is indicated 312a by the control information in the DL CTL 211.

The DL concept 300b is illustrated in Figure 3b. As shown, the ACK 222 can either be in UL CTL 218 or located before a certain time shift from UL CTL 218 and multiplexed with the UL data 215. The exact position of the ACK 222 is also indicated 312b by the control information in the DL CTL 211.

In this way, the transmitter/receiver, i.e. transceiver of the radio device has the flexibility to choose when to send the ACK 222, based on the current processing power, latency requirement and reliability requirement.

The control information in the DL CTL 211 can also signal 312a, 312b further parameters as described in the following. 1) Time location of the ACK 222: This parameter is mainly determined based on throughput and processing power; a) Option 1: Only 1 ACK location determined for all UEs; b) Option 2: Group users into groups, each with an ACK location. In total, multiple ACK locations. 2) Processing power of the UE: Usually the UEs are grouped into different categories with different processing powers. However, since a UE may have other ongoing processing tasks (e.g. sidelink), the UE should signal its current available processing power, or required time per unit data; a) Alternative: UE can signal the preferred ACK location from a predefined set of locations (provided by the BS). 3) Latency constraint on RTT: This parameter can be signalled at the connection establishment phase to indicate the requirement on latency. Afterwards, if DL-UL interchange is allowed, the node with lower latency can play the role of the master and takes the position of the DL transmission. 4) Bundling parameter: How many subframes are bundled per single ACK. 5) Frequency location of the ACK: a) Option 1: Packed and centered around DC for easier decoding; b) Option 2: Distributed with frequency separation in subcarriers to harvest frequency diversity and to align the data and ACK frequency subcarriers. 6) Number of OFDM symbols occupied by the ACK. For non-bundled ACK with large number of subframes, several symbols may be needed for the ACK. Note that parameter 1), i.e. time location of the ACK 222 is essential and has to be transmitted at all times to account for latency constraint variations. The other parameters are optional in this disclosure and can be signalled only to extend or enhance the functionality of the radio devices.

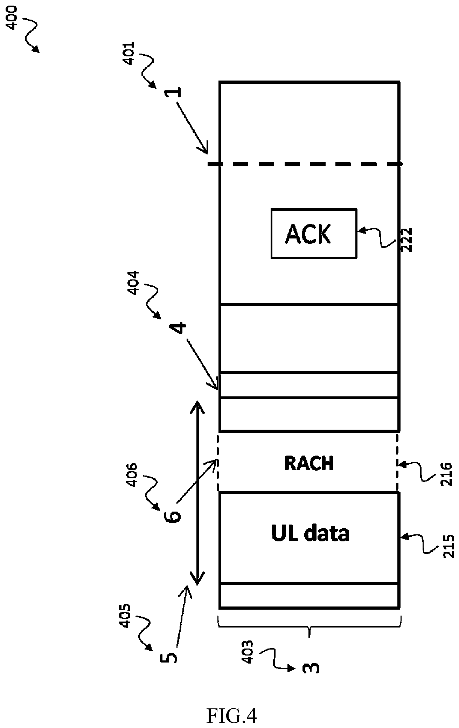

Fig. 4 shows a schematic diagram illustrating a frame structure 400 according to the disclosure for illustration of the factors for determining the ACK location. The frame structure 400 may correspond to any of the frame structures described above with respect to Figures 3a and 3b for the UL concept 300a and the DL concept 300b where a RACH data section 216 follows the UL data section 215.

The location of ACK 222 may be determined adaptively, e.g. based on one or more of the six factors 401, 403, 404, 405, 406 illustrated in Fig. 4 and described in the following: 1) Latency deadline 401: Above all, the RTT should not exceed the latency deadline. 2) Reliability (not depicted in Fig. 4): According to the target reliability, channel conditions and Modulation and Coding Scheme (MCS), the receiver may need different time for decoding, e.g., more channel decoding loops for high reliability traffic. 3) Bandwidth (Receiver Complexity) 403: The larger the bandwidth, the longer the receiver processing delay, hence the longer the RTT. 4) Guard Period 404: Depending on the frame structure design, the longer the guard period, the longer the time the receiver has to decode the message. 5) Switching point/DL-UL ratio 405: This affects the amount of information bits in DL/UL data channel, as well as the available time for processing the DL/UL data. One example is that the larger the DL-UL ratio, the fewer time resources are allocated for UL and thus fewer information to process. Meanwhile, the less time is available for DL data processing. 6) RACH presence 406 (Affect only UL ACK): If the RACH 216 is present, the RACH duration can be used for processing of UL data 215 (extra time for decoding). These six factors are illustrated in Figure 4.

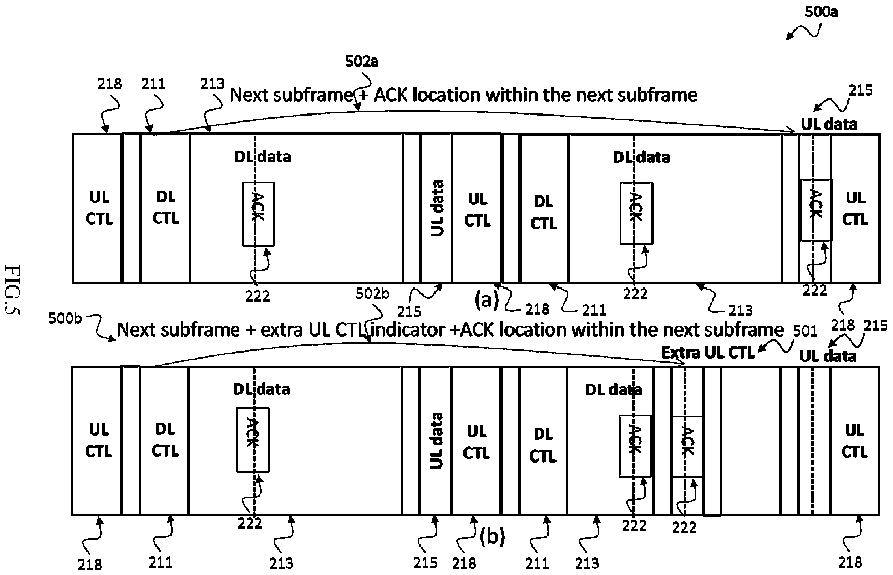

Fig. 5a shows a schematic diagram illustrating a frame structure 500a according to the disclosure illustrating an example for ACK location within the next subframe. The frame structure 500a may correspond to any of the frame structures described above with respect to Figures 3a and 3b for the UL concept 300a and the DL concept 300b or may correspond to the frame structure 400 described above with respect to Fig. 4. Fig. 5b shows a schematic diagram illustrating a frame structure 500b according to the disclosure illustrating an example for an extra UL CTL indicator and ACK location within the next subframe. The frame structure 500b may correspond to the frame structure 500a in which an extra UL CTL section 501 is allocated which includes an ACK 222.

For simplicity and practicality, the case that the ACK 222 location for both DL and UL are indicated 502a, 502b in the DL CTL 211, which is transmitted by the base station (BS) is considered. However, the case that the ACK 222 location can also be indicated in the UL CTL 218 shall not be excluded.

For the UL concept 300a, e.g. as described above with respect to Fig. 3a, the BS, i.e. the transmitter (Tx) of the DL, may decide the ACK 222 location by itself (e.g. based on its own processing power etc.) and can indicate 502a such location as soon as it is decided.

For the DL concept 300b, e.g. as described above with respect to Fig. 3b, since the ACK 222 location depends on the processing power of the User Equipment (UE), i.e. the DL Rx, the BS needs first to get feedback from the UE and then may indicate 502b the ACK 222 location in the DL CTL 211. Therefore, at the initial connection establishment, the DL ACK 222 location is fixed to arrive at UL CTL 218 of the next subframe. After the BS has got feedback from the UE, the BS can decide the DL ACK 222 location (which is shifted certain time ahead of UL CTL 218 of current frame to reduce RTT) and can indicate 502b such location via DL CTL 211.

In the special case that the UL data portion is small or that the DL data requires quite long processing time, the Rx may finish the DL data processing after the UL CTL 218 of the current subframe, and thus, the ACK 222 has to be scheduled in the earliest position of the UL data portion 215 in the next subframe, as illustrated in Figure 5a. In this case, a special indicator in DL CTL 211 is provided to indicate whether the pointed 502a ACK 222 is for the current subframe or the next subframe.

In latency critical scenario, to reduce the RTT, an extra UL CTL channel 501 can be inserted during the DL data 213 of the next subframe, as illustrated in Figure 5b. In this case, the DL CTL 211 needs to indicate the extra UL CTL 501 and the ACK 222 allocation.

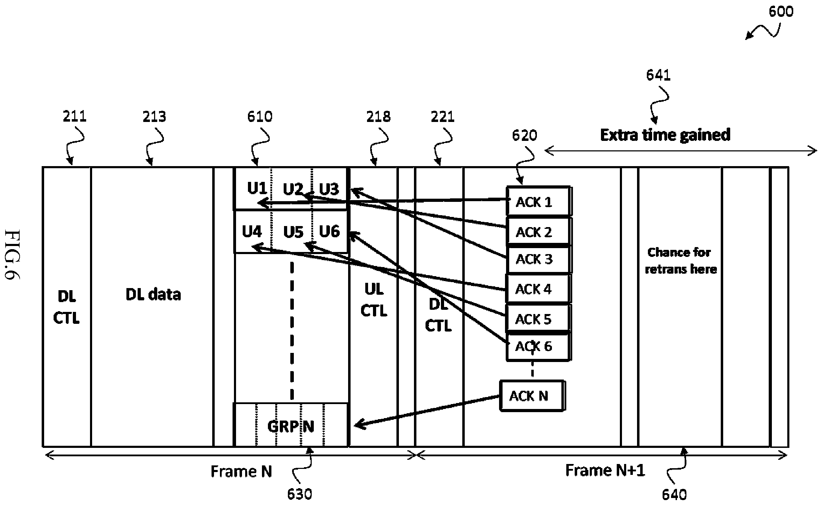

Fig. 6 shows a schematic diagram illustrating a frame structure 600 according to the disclosure to illustrate an exemplary signaling procedure with multi-user. The frame structure 600 may correspond to any of the frame structures described above with respect to Figures 3a to 5b and further includes a multi-user section as described in the following.

In the case of multi-user, the subframe 600 may be subdivided to minislots 610 where each minislot 610 may be assigned to a specific user, for example to the exemplary number of six users U1, U2, U3, U4, U5, U6 as depicted in Fig. 6. Then the ACKs 620 sent to the users U1, U2, U3, U4, U5, U6 are aligned vertically along the frequency axis (vertical axis) as shown in Figure 6, with each ACK 620 corresponding to a minislot 610. Each ACK 620 has a static mapping to the minislot 610 and Physical Resource Block (PRB) to which it is referring. The ACK 620 may also be distributed on the frequency axis with a certain frequency spacing *F_{ACK}* between the ACKs 620 as shown in Fig. 6. The reason for this is to align the ACKs 620 to their corresponding data PRBs. In an exemplary setup, the BS may send a single ACK (e.g. ACK N as shown in Fig. 6) for N consecutive minislots 630 (users). This case may occur when the number of users is large, so the BS groups each N users with similar SNR in a single group 630 and feeds back single ACK (e.g. ACK N as shown in Fig. 6).

By using the multi-user section as described above, extra time can be gained 641 and there is a chance for a retransmission 640 in frame N+1.

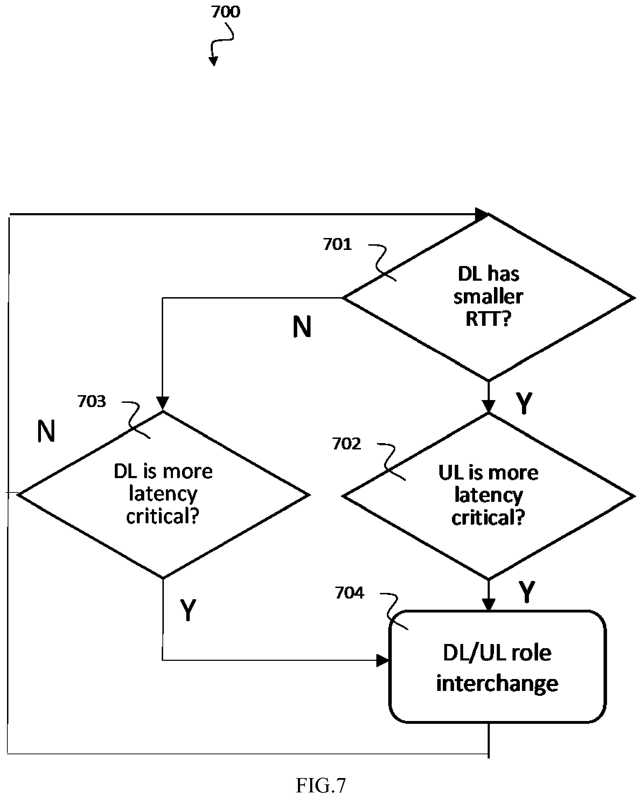

Fig. 7 shows a schematic diagram illustrating an exemplary Downlink-Uplink role exchange procedure 700 according to the disclosure.

In most communication scenarios, one traffic direction is usually latency sensitive and the other direction is less latency sensitive. For example, in a factory automation use case, the link between controller and machines is latency sensitive. However, the link from machines to controller is more latency tolerant. In this disclosure, the DL can achieve lower RTT inherently, especially when there is sufficient processing power. In this case, traffic with low latency requirement should play the DL role and the other the UL role. DL-UL role interchange is specifically important in Device-to-Device (D2D) scenarios where there is no actual DL and UL, rather a side-link.

An approach shown in Fig. 7 is that whenever a link is setup, a certain "handshake" 700 is done prior to the communication session, so that the link with shorter latency constraints can take the role of the DL. Afterwards, the system can periodically check whether the current UL becomes more latency critical. When yes, the role interchange is triggered. In this way, the DL-UL roles can be dynamically interchanged to suit the actual latency constraints. An illustration of this procedure is shown in Figure 7, where a first block 701 checks if DL has smaller RTT. If result of first block 701 is yes, a second block 702 checks whether UL is more latency critical. If result of first block 701 is no, a third block 703 checks whether DL is more latency critical. If result of second block 702 or third block 703 is yes, a fourth block 704 performs DL/UL role interchange. Then, the procedure 700 returns to first block 701.

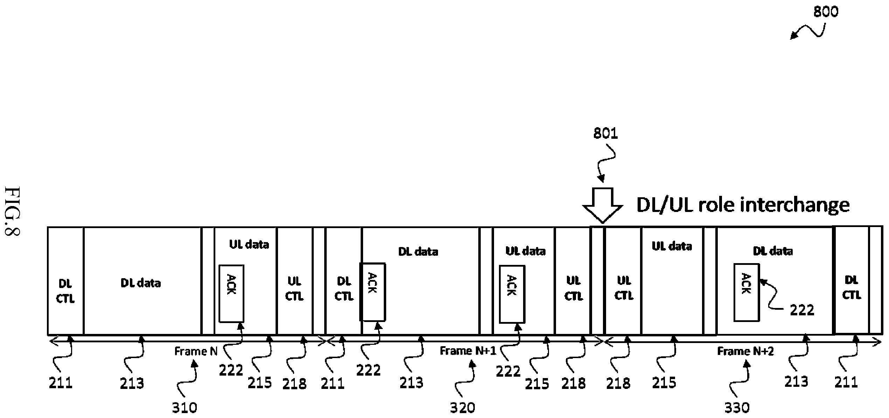

Fig. 8 shows a schematic diagram illustrating an exemplary frame structure 800 according to the disclosure before and after a DL-UL role exchange. The frame structure 800 may correspond to any of the frame structures described above with respect to Figures 3a to 6 where a DL-UL role exchange trigger 801 reverses the structure of the frame with respect to DL and UL sections. In the example of Fig. 8 the DL-UL role exchange trigger 801 is at the end of subframe N+1 320, so subframes N 310 and N+1 320 have the same structure while subframe N+2 has a reverse structure where DL and UL sections are interchanged.

Note that in this case the switching point of the frame should change as well.

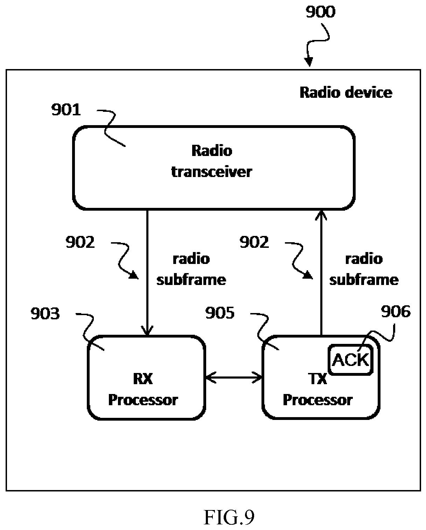

Fig. 9 shows a block diagram of a radio device 900 according to the disclosure. The radio device 900 includes a radio transceiver 901 including transmitter and receiver, a Receive (RX) processor 903 and a Transmit (TX) processor 905. Both processors 903, 905 can be implemented by a single processor, by multiple processor cores or by a multi-processor system.

The radio transceiver 901 is configured to receive a radio subframe 902. The RX processor 903 is configured to process the radio subframe, e.g. decoding and/or demodulating the radio subframe and/or performing instructions received with the radio subframe 902. The TX processor 905 configures or defines an Acknowledgement (ACK) field 906 in the radio subframe 902 based on a processing power of the RX processor 903 and/or a processing power of a second radio device, e.g. a second radio device described above with respect to Figures 3 to 8. Defining the ACK field 906 may be according to the description above with respect to Figures 3 to 8. The second radio device can be a mobile communication device such as a user equipment, a mobile terminal or a vehicle or a car. The second radio device can be a base station that receives the radio subframe 902 transmitted by the TX processor 905. I.e. for the second radio device, the radio subframe 902 corresponds to a received subframe that is to be processed by the second radio device, e.g. decoding and/or demodulating the received radio subframe and/or performing instructions received with the radio subframe as described above with respect to the RX processor 903 of the radio device 900. The structure and functionality of the second radio device may correspond to the structure and functionality of the radio device 900 depicted in Fig. 9. The radio transceiver 900 is further configured to transmit the radio subframe 902, processed by the TX processor 905, to the second radio device.

The TX processor 905 is configured to define the ACK field 906 in the radio subframe 902. This defining the ACK field 906 is based on a metric with respect to a latency parameter and/or a reliability parameter. The latency parameter may specify a maximum latency between reception of the radio subframe 902 and transmission of the radio subframe 902 which may depend on the processing power of the RX processor 903 and/or the processing power of the TX processor 905. The latency parameter may also specify a maximum latency between transmission of the radio subframe 902 and reception of the radio subframe 902 which may depend on the round trip time (RTT) and the processing power of the second communication device. The reliability parameter may depend on the latency requirement and/or on the processing powers of the communication device 900 and the second communication device. When the processing powers are high, reliability is high, when the processing powers are low, reliability is low.

Defining the ACK field 906 may be based on feedback from the second radio device. The feedback may indicate the processing power of the second radio device and/or a required processing time for the radio subframe 902. Defining the ACK field 906 may include the following: determining a location of the ACK field 906 in the radio subframe 902; and setting a value of the ACK field 906 to an Acknowledgement (ACK) when processing the radio subframe 902 by the RX processor 903 is successful or to a Non-Acknowledgement (NACK) when processing the radio subframe 902 by the RX processor 903 is not successful. A successful processing of the radio subframe 902 can indicate that processing of the radio subframe 902 is finished within a certain time frame, e.g. a time frame depending on a structure of the radio subframe 902.

The radio device 900 may be configured for an uplink transmission, e.g. as described above with respect to Fig. 3a in which the radio device 900 configures the radio subframe 902 to comprise a Downlink control section, DL CTL and a Downlink data section, DL DATA, and locates the ACK field 906 within the DL CTL or after a certain time shift from the DL CTL and multiplexes the ACK field 906 with the DL DATA, e.g. as described above for the uplink concept 300a described above with respect to Fig. 3a.

The radio device 900 may configure the DL CTL to indicate the location of the ACK field 906, e.g. as described above with respect to Figs. 3 to 8. The radio device 900 may be configured for a Downlink transmission, in which the radio device 900 configures the radio subframe 902 to comprise an Uplink data section, UL DATA and an Uplink control section, UL CTL and locates the ACK field 906 within the UL CTL or before a certain time shift from the UL CTL and multiplexes the ACK field 906 with the UL DATA, e.g. as described above with respect to Figs. 3 to 8.

The radio subframe 902 may further comprise a Downlink control section, DL CTL and the radio device 900 may configure the DL CTL to indicate the location of the ACK field 906, e.g. as described above with respect to Figs. 3 to 8. The TX processor 905 may set a value of the ACK field 906 in one of the next radio subframes if the RX processor 903 cannot finish the processing of a Downlink data section, DL DATA in the radio subframe 902 before the current UL CTL. The radio device 900 may be configured to set an indicator in the radio subframe 902 for indicating whether the ACK field 906 is located in the current radio subframe or in one of the next radio subframes, e.g. as described above with respect to Figs. 3 to 8.

The radio device 900 may be configured to insert an extra UL CTL within the DL DATA of the next radio subframe and to set the ACK field 906 within the extra UL CTL, and may be configured to indicate that there is an extra UL CTL and/or to indicate a location of the extra UL CTL in the radio subframe 902, e.g. as described above with respect to Figs. 3 to 8.

The radio subframe 902 is subdivided into a plurality of minislots, e.g. minislots 610 as depicted in Fig. 6. The ACK field 906 comprises a plurality of ACK messages, e.g. ACK messages 620 as depicted in Fig. 6, each one related to a corresponding minislot 610. The RX processor 903 is configured to process the plurality of minislots 610 and the TX processor 905 is configured to acknowledge the processing of a respective minislot 610 by setting a corresponding ACK message 620 in the ACK field 906 of the radio subframe 902, e.g. as described above with respect to Fig. 6.

The ACK messages 620 corresponding to the plurality of minislots 610 may have a same starting time within the radio subframe 902, e.g. as shown in Fig. 6. The radio subframe 902 is divided in time in terms of minislots 610 and in frequency in terms of resource blocks as shown in Fig. 6. Each ACK message location points to a certain minislot 610 and resource block according to a certain predefined mapping rule, e.g. as described above with respect to Fig. 6. The TX processor 905 may be configured to acknowledge the processing of a specific number of minislots 610, in particular minislots having a similar range of channel quality, by setting a single Acknowledgement message, e.g. ACK N as shown in Fig. 6.

The TX processor 905 may be configured to perform a Downlink (DL)-Uplink (UL) role interchange, e.g. an DL-UL role interchange 800 as described above with respect to Fig. 8, by interchanging positions of a Downlink Control section, DL CTL and an Uplink Control section, UL CTL, as well as positions of a Downlink Data section, DL DATA and an Uplink data section, UL DATA in the radio subframe 902.

The TX processor 905 may be configured to run a DL-UL role interchange procedure, e.g. a procedure 700 as described above with respect to Fig. 7, for triggering the DL-UL role interchange 800. The DL-UL role interchange procedure 700 may be based on uplink and downlink latency parameters.

A location of the ACK field 906 may depend on at least one of the following: a bandwidth of the transceiver 901, a guard period in the radio subframe 902, a ratio between a Downlink data section, DL DATA and an Uplink data section, UL DATA in the radio subframe 902 and a presence of a random access channel, RACH, e.g. a RACH 216 as described above with respect to Fig. 2, in the radio subframe 902.

The techniques described in this disclosure can be incorporated within the standard, in particular the 3GPP New Radio standardization. The techniques can be implemented in different radio devices, in particular radio devices having transmitters and receivers (transceivers) with different processing powers, and in particular in situations where the subframe duration is long.

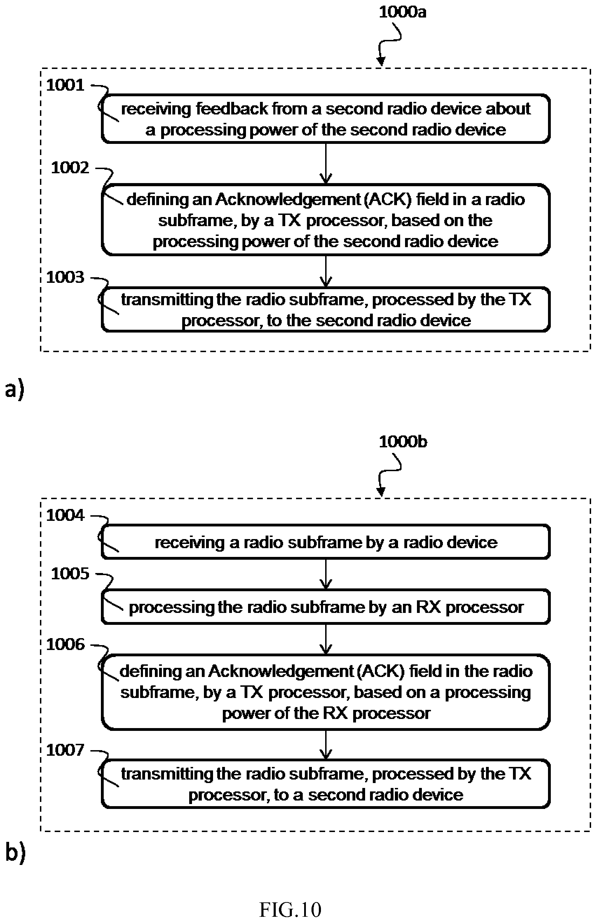

Fig. 10a shows a schematic diagram illustrating a method 1000a for processing a radio subframe according to the disclosure. The method is related to the Downlink concept as described above.

The method 1000a includes receiving 1001 feedback from a second radio device about a processing power of the second radio device.

The method 1000a further includes defining 1002 an Acknowledgement (ACK) field in a radio subframe, by a TX processor, e.g. a TX processor 905 described above with respect to Fig. 9, based on the processing power of the second radio device, e.g. as described above with respect to Figures 3a to 9.

The method 1000a further includes transmitting 1003 the radio subframe 902, processed by the TX processor 905, to the second radio device, e.g. as described above with respect to Figures 3a to 9.

Fig. 10b shows a schematic diagram illustrating a method 1000b for processing a radio subframe according to the disclosure. The method is related to the Uplink concept as described above.

The method 1000b includes receiving 1004 a radio subframe by a radio device. The method 1000b further includes processing 1005 the radio subframe by an RX processor, e.g. an RX processor 903 as described above with respect to Fig. 9.

The method 1000b further includes defining 1006 an Acknowledgement (ACK) field in the radio subframe, by a TX processor, e.g. a TX processor 905 described above with respect to Fig. 9, based on a processing power of the RX processor, e.g. as described above with respect to Figures 3a to 9.

The method 1000b may further include transmitting 1007 the radio subframe, processed by the TX processor 905, to a second radio device, e.g. as described above with respect to Figures 3a to 9.

The present disclosure also supports a computer program product including computer executable code or computer executable instructions that, when executed, causes at least one computer to execute the performing and computing steps described herein, in particular the steps of the methods described above. Such a computer program product may include a readable non-transitory storage medium storing program code thereon for use by a computer. The program code may perform the processing and computing steps described herein, in particular the methods 1000a, 1000b described above with respect to Figs. 10a and 10b.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the appended claims.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the appended claims. It is therefore to be understood that within the scope of the appended claims the invention may be practiced otherwise than as specifically described herein.

The method 1000b may further include transmitting 1007 the radio subframe, processed by the TX processor 905, to a second radio device, e.g. as described above with respect to Figures 3a to 9.

The present disclosure also supports a computer program product including computer executable code or computer executable instructions that, when executed, causes at least one computer to execute the performing and computing steps described herein, in particular the steps of the methods described above. Such a computer program product may include a readable non-transitory storage medium storing program code thereon for use by a computer. The program code may perform the processing and computing steps described herein, in particular the methods 1000a, 1000b described above with respect to Figs. 10a and 10b.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A radio device (900), in particular a user equipment, UE, a base station, BS, or a Sidelink device, comprising:
a radio transceiver (901) configured to receive a radio subframe (902);
a receive, RX, processor (903), configured to process the radio subframe (902); and
a transmit, TX, processor (905), configured to define an Acknowledgement, ACK, field (906) in the radio subframe (902) based on a processing power of the RX processor (903) or a processing power of a second radio device, wherein defining the ACK field (906) is further based on a metric with respect to a latency parameter and/or a reliability parameter;
wherein the radio transceiver (901) is configured to transmit the radio subframe (902), processed by the TX processor (905), to the second radio device;
wherein the radio subframe (902) is subdivided into a plurality of minislots (610),
wherein the ACK field (906) comprises a plurality of ACK messages (620), each one related to a corresponding minislot (610),
wherein the RX processor (903) is configured to process the plurality of minislots (610) and the TX processor (905) is configured to acknowledge the processing of a respective minislot (610) by setting a corresponding ACK message (620) in the ACK field (906) of the radio subframe (902);
wherein the radio subframe (902) is divided in time in terms of minislots (610) and in frequency in terms of resource blocks, and
wherein each ACK message location is pointing to a certain minislot (610) and resource block according to a certain predefined mapping rule.

2. The radio device (900) of claim 1,
wherein defining the ACK field (906) is based on feedback from the second radio device, the feedback indicating the processing power of the second radio device and/or a required processing time for the radio subframe (902) and/or a preferred ACK position within the radio subframe.

3. The radio device (900) of one of the preceding claims, wherein defining the ACK field (906) comprises:
determining a location of the ACK field (906) in the radio subframe (902); and
setting a value of the ACK field (906) to an ACK when processing the radio subframe (902) by the RX processor (903) is successful or to a Non-Acknowledgement, NACK, when processing the radio subframe (902) by the RX processor (903) is not successful.

4. The radio device (900) of one of the preceding claims, configured for an uplink transmission, in which the radio device (900) is configured to define:
the radio subframe (902) to comprise a Downlink control section, DL CTL, and a Downlink data section, DL DATA, and to locate the ACK field (906) within the DL CTL or after a certain time shift from the DL CTL and to multiplex the ACK field (906) with the DL DATA.

5. The radio device (900) of claim 4,
wherein the radio device (900) is configured to define the DL CTL to indicate the location of the ACK field (906).

6. The radio device (900) of one of claims 1 to 3, configured for a Downlink transmission, in which the radio device (900) is configured to define:
the radio subframe (902) to comprise an Uplink data section, UL DATA, and an Uplink control section, UL CTL, and to locate the ACK field (906) within the UL CTL or before a certain time shift from the UL CTL and to multiplex the ACK field (906) with the UL DATA.

7. The radio device (900) of claim 6,
wherein the radio subframe (902) further comprises a Downlink control section, DL CTL, wherein the radio device (900) is configured to define the DL CTL to indicate the location of the ACK field (906).

8. The radio device (900) of claim 6 or 7,
wherein the TX processor (905) is configured to determine the ACK position and set the corresponding value in one of the next subframes if the RX processor (903) cannot finish the processing of a Downlink data section, DL DATA, in the radio subframe (902) before the current UL CTL.

9. The radio device (900) of one of claims 6 to 8,
configured to insert an extra UL CTL within the DL DATA of the next radio subframe and to set the ACK field (906) within the extra UL CTL, and
configured to indicate that there is an extra UL CTL and/or to indicate a location of the extra UL CTL in the radio subframe (902).

10. The radio device (900) of one of the preceding claims,
wherein the TX processor (905) is configured to acknowledge the processing of a specific number of minislots (610), in particular minislots having similar channel qualities, by setting a single ACK message, ACK N.

11. The radio device (900) of one of the preceding claims,
wherein the TX processor (905) is configured to perform a Downlink, DL, -Uplink, UL, role interchange (800) by interchanging positions of a Downlink Control section, DL CTL, and an Uplink Control section, UL CTL, as well as positions of a Downlink Data section, DL DATA, and an Uplink data section, UL DATA, in the radio subframe (902).

12. The radio device (900) of one of the preceding claims,
wherein a location of the ACK field (906) depends on at least one of the following: a bandwidth of the transceiver (901), a guard period in the radio subframe (902), a ratio between a Downlink data section, DL DATA, and an Uplink data section, UL DATA, in the radio subframe (902) and a presence of a random access channel, RACH, (216) in the radio subframe (902).

## Patentansprüche

1. Funkvorrichtung (900), insbesondere eine Benutzereinrichtung (user equipment - UE), eine Basisstation (BS) oder eine Sidelink-Vorrichtung, Folgendes umfassend:
einen Funksendeempfänger (901), der konfiguriert ist, um einen Funkunterrahmen (902) zu empfangen;
einen Empfangs(receive - RX)-Prozessor (903), der konfiguriert ist, um den Funkunterrahmen (902) zu verarbeiten; und
einen Sende(transmit - TX)-Prozessor (905), der konfiguriert ist, um ein Quittungs(Acknowledgement - ACK)-Feld (906) in dem Funkunterrahmen (902) basierend auf einer Verarbeitungsleistung des RX-Prozessors (903) oder einer Verarbeitungsleistung einer zweiten Funkvorrichtung zu definieren, wobei das Definieren des ACK-Feldes (906) ferner auf einer Metrik in Bezug auf einen Latenzparameter und/oder einen Zuverlässigkeitsparameter basiert;
wobei der Funksendeempfänger (901) konfiguriert ist, um den durch den TX-Prozessor (905) verarbeiteten Funkunterrahmen (902) an die zweite Funkvorrichtung zu senden;
wobei der Funkunterrahmen (902) in mehrere Minislots (610) unterteilt ist,
wobei das ACK-Feld (906) mehrere ACK-Nachrichten (620) umfasst, wobei sich jede auf einen entsprechenden Minislot (610) bezieht,
wobei der RX-Prozessor (903) konfiguriert ist, um die mehreren Minislots (610) zu verarbeiten, und der TX-Prozessor (905) konfiguriert ist, um die Verarbeitung eines jeweiligen Minislots (610) durch Einstellen einer entsprechenden ACK-Nachricht (620) in das ACK-Feld (906) des Funkunterrahmens (902) zu quittieren;
wobei der Funkunterrahmen (902) zeitlich in Form von Minislots (610) und frequenzmäßig in Form von Ressourcenblöcken unterteilt ist, und
wobei jeder ACK-Nachrichtenort auf einen bestimmten Minislot (610) und einen Ressourcenblock gemäß einer bestimmten vordefinierten Zuordnungsregel zeigt.

2. Funkvorrichtung (900) nach Anspruch 1,
wobei das Definieren des ACK-Feldes (906) auf einer Rückmeldung von der zweiten Funkvorrichtung basiert, wobei die Rückmeldung die Verarbeitungsleistung der zweiten Funkvorrichtung und/oder eine erforderliche Verarbeitungszeit für den Funkunterrahmen (902) und/oder eine bevorzugte ACK-Position innerhalb des Funkunterrahmens anzeigt.

3. Funkvorrichtung (900) nach einem der vorhergehenden Ansprüche, wobei das Definieren des ACK-Feldes (906) Folgendes umfasst:
Bestimmen eines Ortes des ACK-Feldes (906) in dem Funkunterrahmen (902); und
Einstellen eines Werts des ACK-Feldes (906) auf eine ACK, wenn die Verarbeitung des Funkunterrahmens (902) durch den RX-Prozessor (903) erfolgreich ist, oder auf eine Nicht-Quittung (Non-Acknowledgement - NACK), wenn die Verarbeitung des Funkunterrahmens (902) durch den RX-Prozessor (903) nicht erfolgreich ist.

4. Funkvorrichtung (900) nach einem der vorhergehenden Ansprüche, die für eine Uplink-Sendung konfiguriert ist, wobei die Funkvorrichtung (900) konfiguriert ist, um Folgendes zu definieren:
den Funkunterrahmen (902), um einen Downlink-Steuerabschnitt (Downlink control section - DL CTL) und einen Downlink-Datenabschnitt (Downlink data section - DL DATA) zu umfassen, und um das ACK-Feld (906) innerhalb des DL CTL oder nach einer bestimmten Zeitverschiebung von dem DL CTL zu lokalisieren und das ACK-Feld (906) mit dem DL DATA zu multiplexen.

5. Funkvorrichtung (900) nach Anspruch 4,
wobei die Funkvorrichtung (900) konfiguriert ist, um den DL CTL zu definieren, um den Ort des ACK-Feldes (906) anzuzeigen.

6. Funkvorrichtung (900) nach einem der Ansprüche 1 bis 3, die für eine Downlink-Sendung konfiguriert ist, wobei die Funkvorrichtung (900) konfiguriert ist, um Folgendes zu definieren:
den Funkunterrahmen (902), um einen Uplink-Datenabschnitt (Uplink data section - UL DATA) und einen Uplink-Steuerabschnitt (Uplink control section - UL CTL) zu umfassen, und um das ACK-Feld (906) innerhalb des UL CTL oder vor einer bestimmten Zeitverschiebung von dem UL CTL zu lokalisieren und das ACK-Feld (906) mit dem UL DATA zu multiplexen.

7. Funkvorrichtung (900) nach Anspruch 6,
wobei der Funkunterrahmen (902) ferner einen Downlink-Steuerabschnitt (DL CTL) umfasst, wobei die Funkvorrichtung (900) konfiguriert ist, um den DL CTL zu definieren, um den Ort des ACK-Feldes (906) anzuzeigen.

8. Funkvorrichtung (900) nach Anspruch 6 oder 7,
wobei der TX-Prozessor (905) konfiguriert ist, um die ACK-Position zu bestimmen und den entsprechenden Wert in einem der nächsten Unterrahmen einzustellen, falls der RX-Prozessor (903) die Verarbeitung eines Downlink-Datenabschnitts (DL DATA) in dem Funkunterrahmen (902) nicht vor dem aktuellen UL CTL beenden kann.

9. Funkvorrichtung (900) nach einem der Ansprüche 6 bis 8,
die konfiguriert ist, um einen zusätzlichen UL CTL innerhalb des DL DATA des nächsten Funkunterrahmens einzufügen und das ACK-Feld (906) innerhalb des zusätzlichen UL CTL einzustellen, und
die konfiguriert ist, um anzuzeigen, dass ein zusätzlicher UL CTL vorhanden ist, und/oder um einen Ort des zusätzlichen UL CTL in dem Funkunterrahmen (902) anzuzeigen.

10. Funkvorrichtung (900) nach einem der vorhergehenden Ansprüche,
wobei der TX-Prozessor (905) konfiguriert ist, um die Verarbeitung einer spezifischen Anzahl von Minislots (610), insbesondere von Minislots, die ähnliche Kanalqualitäten aufweisen, durch Einstellen einer einzelnen ACK-Nachricht (ACK N) zu quittieren.

11. Funkvorrichtung (900) nach einem der vorhergehenden Ansprüche,
wobei der TX-Prozessor (905) konfiguriert ist, um einen Downlink(DL)-Uplink(UL)-Rollenaustausch (800) durch Austauschen von Positionen eines Downlink-Steuerabschnitts (DL CTL) und eines Uplink-Steuerabschnitts (UL CTL), sowie von Positionen eines Downlink-Datenabschnitts (DL DATA) und eines Uplink-Datenabschnitts (UL DATA) in dem Funkunterrahmen (902) durchzuführen.

12. Funkvorrichtung (900) nach einem der vorhergehenden Ansprüche,
wobei ein Ort des ACK-Feldes (906) von Folgendem abhängt: einer Bandbreite des Sendeempfängers (901), einer Schutzperiode in dem Funkunterrahmen (902), einem Verhältnis zwischen einem Downlink-Datenabschnitt (DL DATA) und einem Uplink-Datenabschnitt (UL DATA) in dem Funkunterrahmen (902) und/oder einem Vorhandensein eines Kanals mit wahlfreiem Zugriff (random access channel - RACH) (216) in dem Funkunterrahmen (902).

## Revendications

1. Dispositif radio (900), en particulier un équipement utilisateur, UE, une station de base, BS, ou un dispositif de liaison latérale, comprenant :
un émetteur-récepteur radio (901) configuré pour recevoir une sous-trame radio (902) ;
un processeur de réception, RX, (903), configuré pour traiter la sous-trame radio (902) ; et
un processeur de transmission, TX, (905), configuré pour définir un champ d'accusé de réception, ACK, (906), dans la sous-trame radio (902) sur la base d'une puissance de traitement du processeur RX (903) ou d'une puissance de traitement d'un second dispositif radio, la définition du champ ACK (906) étant en outre basée sur une métrique par rapport à un paramètre de latence et/ou à un paramètre de fiabilité ;
l'émetteur-récepteur radio (901) étant configuré pour transmettre la sous-trame radio (902), traitée par le processeur TX (905), au second dispositif radio ;
la sous-trame radio (902) étant subdivisée en une pluralité de mini-intervalles (610),
le champ ACK (906) comprenant une pluralité de messages ACK (620), chacun étant lié à un mini-intervalle (610) correspondant,
le processeur RX (903) étant configuré pour traiter la pluralité de mini-intervalles (610) et le processeur TX (905) étant configuré pour accuser réception du traitement d'un mini-intervalle (610) respectif en établissant un message ACK (620) correspondant dans le champ ACK (906) de la sous-trame radio (902) ;
la sous-trame radio (902) étant divisée en temps en termes de mini-intervalles (610) et en fréquence en termes de blocs de ressources, et
chaque emplacement de message ACK pointant vers un certain mini-intervalle (610) et un certain bloc de ressources selon une certaine règle de mappage prédéfinie.

2. Dispositif radio (900) selon la revendication 1,
dans lequel la définition du champ ACK (906) est basée sur la rétroaction du second dispositif radio, la rétroaction indiquant la puissance de traitement du second dispositif radio et/ou un temps de traitement requis pour la sous-trame radio (902) et/ou une position ACK préférée à l'intérieur de la sous-trame radio.

3. Dispositif radio (900) selon l'une quelconque des revendications précédentes, dans lequel la définition du champ ACK (906) comprend :
la détermination d'un emplacement du champ ACK (906) dans la sous-trame radio (902) ; et
l'établissement d'une valeur du champ ACK (906) sur un ACK lorsque le traitement de la sous-trame radio (902) par le processeur RX (903) réussit ou sur un non-accusé de réception, NACK, lors du traitement de la sous-trame radio (902) par le processeur RX (903) échoue.

4. Dispositif radio (900) selon l'une des revendications précédentes, configuré pour une transmission de liaison montante, dans lequel le dispositif radio (900) est configuré pour définir :
la sous-trame radio (902) devant comprendre une section de commande de liaison descendante, DL CTL, et une section de données de liaison descendante, DL DATA, et devant localiser le champ ACK (906) à l'intérieur de la DL CTL ou après un certain décalage de temps de la DL CTL et devant multiplexer le champ ACK (906) avec la DL DATA.

5. Dispositif radio (900) selon la revendication 4,
dans lequel le dispositif radio (900) est configuré pour définir la DL CTL pour indiquer l'emplacement du champ ACK (906).

6. Dispositif radio (900) selon l'une des revendications 1 à 3, configuré pour une transmission de liaison descendante, dans lequel le dispositif radio (900) est configuré pour définir :
la sous-trame radio (902) devant comprendre une section de données de liaison montante, UL DATA, et une section de commande de liaison montante, UL CTL, et devant localiser le champ ACK (906) à l'intérieur de l'UL CTL ou avant un certain décalage de temps de l'UL CTL et devant multiplexer le champ ACK (906) avec l'UL DATA.

7. Dispositif radio (900) selon la revendication 6,
dans lequel la sous-trame radio (902) comprend en outre une section de commande de liaison descendante, DL CTL, dans lequel le dispositif radio (900) est configuré pour définir la DL CTL pour indiquer l'emplacement du champ ACK (906).

8. Dispositif radio (900) selon la revendication 6 ou 7,
dans lequel le processeur TX (905) est configuré pour déterminer la position ACK et établir la valeur correspondante dans l'une des sous-trames suivantes si le processeur RX (903) ne peut pas terminer le traitement d'une section de données de liaison descendante, DL DATA, dans la sous-trame radio (902) avant l'UL CTL actuel.

9. Dispositif radio (900) selon l'une des revendications 6 à 8,
configuré pour insérer une UL CTL supplémentaire à l'intérieur de la DL DATA de la sous-trame radio suivante et pour établir le champ ACK (906) à l'intérieur de l'UL CTL supplémentaire, et
configuré pour indiquer qu'il existe une UL CTL supplémentaire et/ou pour indiquer un emplacement de l'UL CTL supplémentaire dans la sous-trame radio (902).

10. Dispositif radio (900) selon l'une des revendications précédentes,
dans lequel le processeur TX (905) est configuré pour accuser réception du traitement d'un nombre spécifique de mini-intervalles (610), en particulier de mini-intervalles ayant des qualités de canal similaires, en établissant un seul message ACK, ACK N.

11. Dispositif radio (900) selon l'une des revendications précédentes,
dans lequel le processeur TX (905) est configuré pour effectuer un interchange de rôle de liaison descendante, DL, -liaison montante, UL, (800) en interchangeant les positions d'une section de commande de liaison descendante, DL CTL, et d'une section de commande de liaison montante, UL CTL, ainsi que les positions d'une section de données de liaison descendante, DL DATA, et d'une section de données de liaison montante, UL DATA, dans la sous-trame radio (902).

12. Dispositif radio (900) selon l'une des revendications précédentes,
dans lequel un emplacement du champ ACK (906) dépend d'au moins l'un des suivants : une largeur de bande de l'émetteur-récepteur (901), une période de garde dans la sous-trame radio (902), un rapport entre une section de données de liaison descendante, DL DATA, et une section de données de liaison montante, UL DATA, dans la sous-trame radio (902) et une présence d'un canal d'accès aléatoire, RACH, (216) dans la sous-trame radio (902).
